# EUROPEAN PATENT SPECIFICATION

(11) **EP 2 863 672 B1**
(45) Date of publication and mention of the grant of the patent: **14.08.2019**
(21) Application number: 12878662.1
(22) Date of filing: 16.11.2012
(51) Int. Cl.: H04W 4/02, H04W 16/14, H04W 28/16

(54) **COMMUNICATION DEVICE, AND COMMUNICATION CONTROL METHOD FOR FREQUENCY SELECTION**
KOMMUNIKATIONSVORRICHTUNG UND KOMMUNIKATIONSSTEUERUNGSVERFAHREN ZUR FREQUENZAUSWAHL
DISPOSITIF DE COMMUNICATION ET PROCÉDÉ DE COMMANDE DE COMMUNICATION POUR LA SÉLECTION DE FRÉQUENCE

(30) Priority: 14.06.2012 JP 2012134399
(43) Date of publication of application: 22.04.2015
(73) Proprietor: National Institute of Information and Communications Technology, Koganei-shi Tokyo 184-8795 (JP)
(72) Inventor: ISHIZU, Kentaro, Koganei-shi, Tokyo 1848795 (JP); HARADA, Hiroshi, Koganei-shi, Tokyo 1848795 (JP)
(74) Representative: Granleese, Rhian Jane
(86) International application number: PCT/JP2012/007363
(87) International publication number: WO 2013/186824

(56) References cited:
- EP-A2- 2 091 286
- WO-A1-2009/156554
- JP-A- 2009 188 883
- JP-A- 2009 194 823
- JP-A- 2009 200 773
- JP-A- 2012 060 453
- US-A1- 2011 143 761
- US-A1- 2011 310 865
- US-A1- 2011 310 867
- US-B1- 6 434 480

## Description

### TECHNICAL FIELD

The present invention relates to a communication device which is a terminal configured to operate under a television white space (TVWS) environment and to a communication control method in the same, and in particular, relates to a communication device which is usable on the premise that it moves at a high speed to a certain degree or more, and to a communication control method in the same.

### BACKGROUND ART

Wireless communication standards which use the same frequency band as that of a television broadcast being a licensed business and can be operated with no such a license, have been investigated. In these standards, a television broadcaster is a primary user, and only when a licensed frequency band of the primary user is not used, a secondary user is allowed to operate a wireless communication in the frequency band (licensed frequency band which is not used = white space).

In order to confirm that a TV signal does not exist, a communication device used by the secondary user under such an environment inquires of a database specialized for this purpose about a TV channel, for instance. Specifically, current position information of the communication device is transmitted to the database, and a list of frequencies available (effective) at this position is obtained from the database. Then, a frequency to be used is selected from the frequencies in the list, and a wireless communication is operated as the secondary user.

The frequency for the secondary user thus selected is based only on the current position at the time of the inquiry to the database, and when the communication device of the secondary user moves, this frequency is not always a frequency available in a destination area especially when the device moves at a high speed. In such a case, it is necessary to change the frequencies to be used through mutual communications with the database during the movement, and the more frequently they are changed, the more disadvantageous in stably operating the communication.

### PRIOR ART DOCUMENT

### NON-PATENT DOCUMENT

Non-patent Document 1: IEEE802.11af Task Group, http://mentor.ieee.org/802.11/
Non-patent Document 2: IEEE802.22 Working Group, http://mentor.ieee.org/22/
Non-patent Document 3: IEEE802.19.1 Task Group, http://mentor.ieee.org/802.802.19/documents
Non-patent Document 4: Federal Communications Commission, Unlicensed Operation in the TV Broadcast Bands, Second Memorandum Opinion and Order, FCC, 10-17-4, Sept. 23, 2010.
Non-patent Document 5: Ofcom, Digital Dividend: Cognitive Access, Consultation on License Exempting Cognitive Devices using Interleaved Spectrum, July 2009.

US 2011/310867 relates to a method and apparatus to predict routing and maintain connectivity over a geographic area. US 2011/0310865 relates to a method and apparatus to access network connectivity information based on predicted future locations of wireless terminals. And US 2011/0143761 relates to an apparatus for providing advance indication of channels available for use by a mobile device travelling along a geographic path.

### SUMMARY OF THE INVENTION

### PROBLEMS TO BE SOLVED BY THE INVENTION

It is an object of the present invention to provide a communication device which is a terminal configured to operate under a television white space environment and a communication control method in the same, the communication device and the communication control method in the same being capable of advantageously selecting a use frequency even when the communication device moves at a high speed to a certain degree or more.

### MEANS FOR SOLVING THE PROBLEMS

In order to solve the aforesaid problem, a communication device being one aspect of the present invention is a communication device as recited in claim 1.

This communication device is capable of storing and retaining the route information being the planned moving route of the device. Further, regarding the frequency selection policies being the viewpoints in selecting the frequency to be used, it is capable of storing and retaining the option list having the options corresponding to the different viewpoints. Then, it sends the inquiry about the available frequency to the database together with the route information and the option list, and obtains, from the database, the effective frequency information list indicating the available frequencies listed in correspondence to the respective points on the route indicated by the route information and the respective options.

Next, this communication device determines to which point out of the points given from the database the position at this time (second position) is close, and further selects the appropriate option from the option list, as the policy to be applied, based on the nature of the information processing performed by the device. Consequently, it is possible to select the frequency listed in correspondence to the point close to the second position out of the points given from the database and the policy to be applied, as the use frequency from the effective frequency information list. That is, it is configured such that a frequency is selected according to the pre-obtained information on the frequencies available at the respective points so that it becomes possible to cope with the case where the device is moving at a high speed to a certain degree or more, and in addition, this becomes a selection of an advantageous use frequency appropriate for the nature of the information processing.

Further, a communication control method being another aspect of the present invention is a communication control method as recited in claim 6.

This communication control method is a control method conforming to the above-described communication device.

### EFFECT OF THE INVENTION

According to the present invention, it is possible to provide a communication device which is a terminal configured to operate under a television white space environment and a communication control method in the same, the communication device and the communication control method in the same being capable of advantageously selecting a use efficiency even when the device is moving at a high speed to a certain degree or more.

### BRIEF DESCRIPTION OF THE DRAWINGS

FIG. 1 is a functional block diagram illustrating the configuration of a wireless device being one embodiment of the present invention.
FIG. 2 is an explanatory view illustrating an example of route information that a route information storing and retaining unit 12 illustrated in FIG. 1 can store and retain.
FIG. 3 is an explanatory view illustrating an example of an option list that an option list storing and retaining unit 13 illustrated in FIG. 1 can store and retain.
FIG. 4 is an explanatory view illustrating an example of a relation between the route information and frequencies available in respective areas including the route (processing by a database side).
FIG. 5 is an explanatory view illustrating an example of a relation between the route information and points on the route (processing by the database side).
FIG. 6 is an explanatory view illustrating an example of an effective frequency information list indicating available frequencies listed in correspondence to the respective points on the route indicated by the route information and
   respective options in the option list (processing by the database side).

### MODE FOR CARRYING OUT THE INVENTION

As a mode of the present invention, it is also possible to further include a means which receives information indicating the first position for the purpose of specifying the first position. The first position is a position corresponding to a starting point of the planned moving route of the host device. In order to specify this position, a GPS (global positioning system) satellite is usable, for instance. Besides, an input unit (user interface) capable of accepting a manual input by a user may be provided.

Further, as a mode, it is possible to further include a means which obtains the route information from another device for the purpose of making the route information stored and retained. In short, this enables to create the planned moving route by using, for example, a navigation device, and to select a frequency appropriate as the communication device in linkage with the created planned moving route.

Further, as a mode, it is also possible to further include: a means which infers a movement transportation means used for the movement of the host device based on a third position and the first position, the third position being a geographical position where the host device exists at a third point in time later than the first point in time and earlier than the second point in time; and a means which generates the route information based on the movement transportation means for the purpose of making the route information stored and retained.

This is intended to automatically create the route information by inferring the planned moving route, without a user side intentionally creating the planned moving route. For example, when the communication device moves by a movement transportation means such as an expressway or a rapid-transit railway, it is possible to relatively easily infer the movement transportation means based on the initial position (first position) of the communication device and, for example, its position at a point in time immediately thereafter (third position). If the movement transportation means can be inferred, the route information being the planned moving route can naturally be generated.

Further, as a mode, it is also possible that the option list has at least one or both of an option corresponding to a viewpoint to give a higher priority to reducing the number of times the frequency to be used is changed as much as possible and an option corresponding to a viewpoint to give a higher priority to increasing a communication speed as much as possible. This means that it is possible to, for example, select a frequency, with a higher priority given to stable communication or select a frequency, with a higher priority given to high-speed communication, according to the nature of the information processing (application) performed by the host device. Thus taking such a priority into consideration often works in favor of the operation of various kinds of application, and this is enabled.

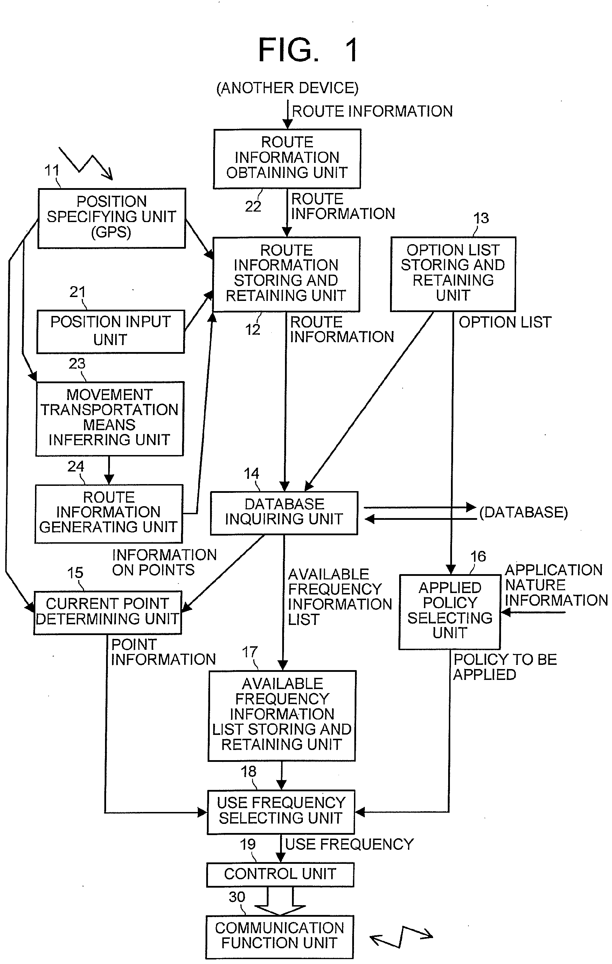

Based on the above, an embodiment of the present invention will be hereinafter described with reference to the drawings. FIG. 1 is a functional block diagram illustrating the configuration of a communication device being one embodiment of the present invention. As illustrated in this drawing, this communication device has a position specifying unit 11, a route information storing and retaining unit 12, an option list storing and retaining unit 13, a database inquiring 14, a current point determining unit 15, an applied policy selecting unit 16, an effective frequency information list storing and retaining unit 17, a use frequency selecting unit 18, a control unit 19, a position input unit 21, a route information obtaining unit 22, a movement transportation means inferring unit 23, a route information generating unit 24, and a communication function unit 30.

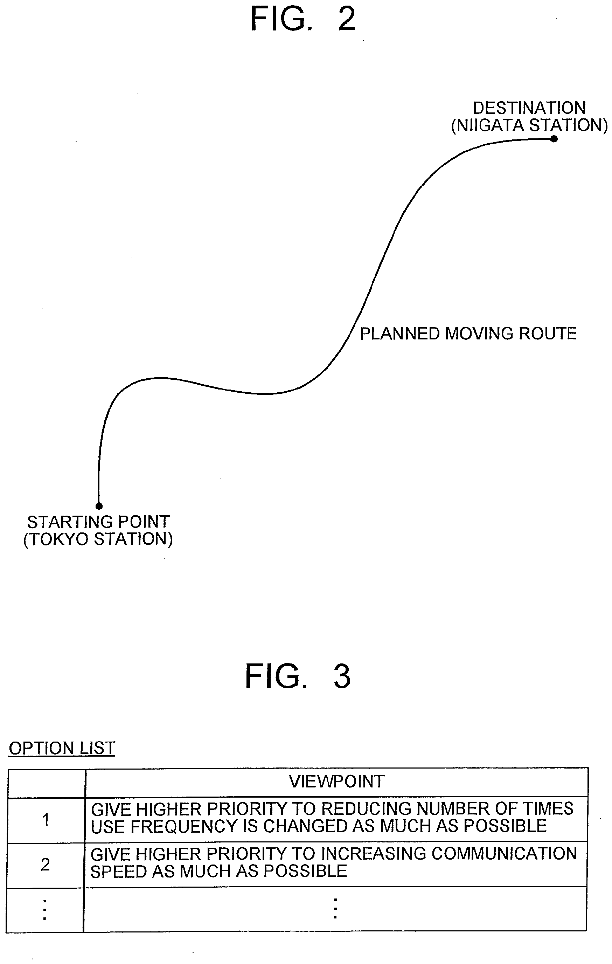

FIG. 1 illustrates the functional block diagram, but in the following description of the operations of the respective units of the configuration in this drawing, FIG. 2 to FIG. 6 will be referred to when necessary.

The position specifying unit 11 specifies a current position of the host device by using, for example, a GPS satellite. The specified current position is given to the route information storing and retaining unit 12, the movement transportation means inferring unit 23, and the current point determining unit 15. The route information storing and retaining unit 12 is a storage unit for storing and retaining route information being a planned moving route of the host device, and is capable of utilizing the current position which is given from the position specifying unit 11 as information on a starting point of the planned moving route. The utilization of the current position in the movement transportation means inferring unit 23 and the current point determining unit 15 will be described later.

The route information storing and retaining unit 12 stores and retains the route information being the planned moving route of the host device as descried above. As one method for this purpose, it is possible to obtain the route information from another device via the route information obtaining unit 22, or it is possible to use the route information generated by the route information generating unit 24. Functions and operations of the route information obtaining unit 22 and the route information generating unit 24 will be described later. The route information is given to the database inquiring unit 14 from the route information storing and retaining unit 12.

FIG. 2 is an explanatory view illustrating an example of the route information that the route information storing and retaining unit 12 illustrated in FIG. 1 can store and retain. As illustrated in FIG. 2, in the route information storing and retaining unit 12, information on the geographically specified planned moving route of the host device is retained. More concretely, the information can be retained as, for example, a set of pieces of sequential information on longitude and latitude (in addition, altitude).

The option list storing and retaining unit 13 stores and retains an option list having options corresponding to different viewpoints regarding frequency selection policies which are viewpoints in selecting a frequency to be used. FIG. 3 illustrates an example of the option list that the option list storing and retaining unit 13 can store and retain. As illustrated in FIG. 3, possible options are, for example, an option to "give a higher priority to reducing the number of times the frequency to be used is changed as much as possible" and an option to give a higher priority to "increasing a communication speed as much as possible". In addition to one or both of these, other options may of course be further provided. The option list can be given from the option list storing and retaining unit 13 to the database inquiring unit 14 and the applied policy selecting unit 16.

Incidentally, when a frequency selected based on the frequency selection policy corresponding to the viewpoint to "give a higher priority to reducing the number of times the frequency to be used is changed as much as possible" is used, it is possible to expect stability by eliminating a possibility that the communication is interrupted, and when a frequency selected based on the frequency selection policy corresponding to the viewpoint to "give a higher priority to increasing a communication speed as much as possible" is used, it is possible to cope with a communication with a larger data amount. Giving a higher priority to any of these often works in favor of the operation of various kinds of application.

The database inquiring unit 14 transmits the route information given from the route information storing and retaining unit 12 and the option list given from the option list storing and retaining unit 13 to the database to inquire about an available frequency (in addition, its maximum transmission power and various other use conditions). This database is a server provided on the Internet so as to provide at least information regarding frequencies which are available without affecting a primary user, to the communication device (secondary user) operable under a TVWS environment.

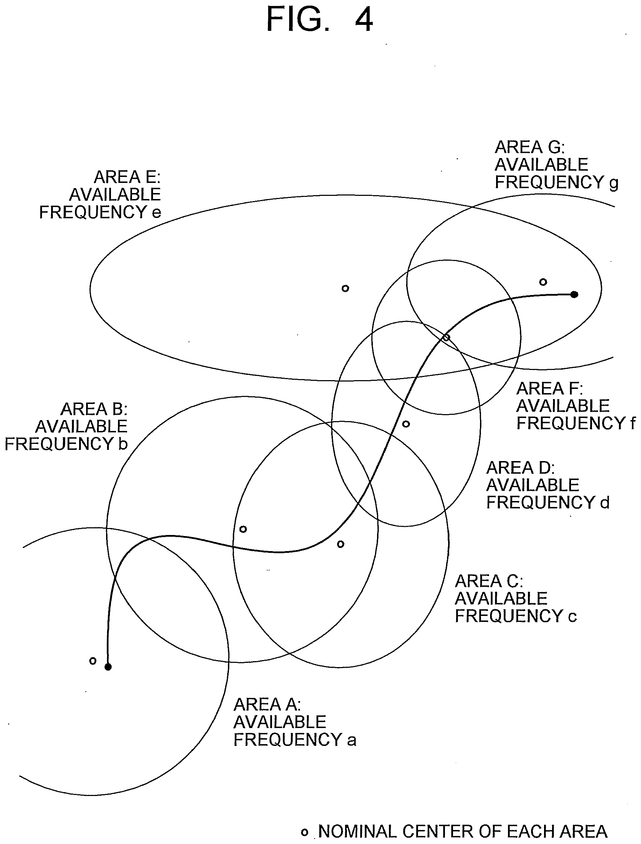

FIG. 4 is an explanatory view illustrating an example of a relation between the route information and frequencies available in respective areas including the route. The database checks the frequencies available in the areas including the route based on the transmitted route information. For example, when the route information in FIG. 2 and the option list in FIG. 3 are transmitted, areas and frequencies are picked up in the database, such as "area A, available frequency a", "area B, available frequency b", "area C, available frequency c", "area D, available frequency d", "area E, available frequency e", "area F, available frequency f", and "area G, available frequency g", as illustrated in FIG. 4.

Note that the number of the available frequencies a and so on is not necessarily one, but a case where the number is plural is also common. Further, the shapes of the areas A to G can be generally more complicated shapes than the illustrated ones because of a mutual relation with the primary user, especially an influence of topography or the like. The shapes of the areas A to G are schematically illustrated for convenience of the description.

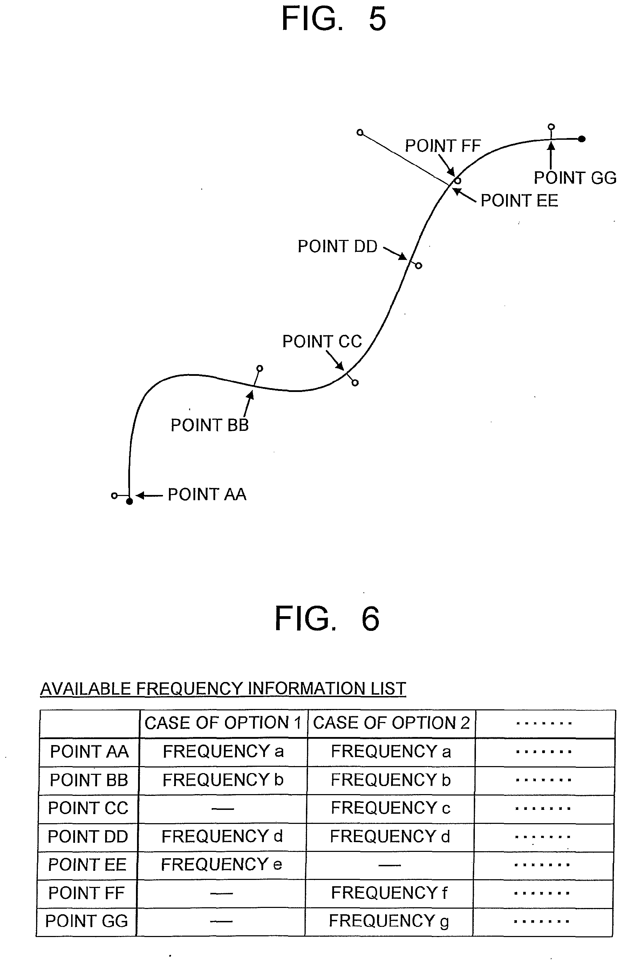

In the database, corresponding points on the route indicated by the route information are next decided based on, for example, nominal center points (refer to FIG. 4) in the respective areas A to G. The corresponding points can be, for example, points on the route whose distances to the center points are the shortest. This is illustrated in FIG. 5. FIG. 5 is an explanatory view illustrating an example of a relation between the route information and the points on the route. The points are decided as a point AA to a point GG as illustrated in FIG. 5.

In the database, recommended frequencies available at the aforesaid points are next decided based on the sent option list, in consideration of the meanings of the options. This will be described with reference to FIG. 6. FIG. 6 is an explanatory view illustrating an example of an effective frequency information list indicating the available frequencies listed in correspondence to the respective points on the route indicated by the route information and the respective options in the option list.

In FIG. 6, "case of option 1" is an option to "give a higher priority to reducing the number of times the frequency to be used is changed as much as possible" as in the option list illustrated in FIG. 3. In the case of this option, the database decides the points on the route and the frequencies available there, such as "point AA, frequency a", "point BB, frequency b", "point DD, frequency d", and "EE, frequency e". Thus deciding the points and the frequencies can reduce the number of times the frequency is changed (three times in this case) under a condition that the communication is not interrupted on the route. Regarding this, FIG. 4 can be referred to again.

Further, in FIG. 6 "case of option 2" is an option to "give a higher priority to increasing the communication speed as much as possible" as in the option list illustrated in FIG. 3. In the case of this option, the database decides the points on the route and the frequencies available there, such as "point AA, frequency a", "point BB, frequency b", "point CC, frequency c", "point DD, frequency d", "point FF, frequency f", and "point GG, frequency g". Thus deciding the points and the frequencies makes it possible to cope with a higher-speed communication since the route stays at a place closer to the center of each of the areas. Regarding that the route stays at the place closer to the center of each of the areas, FIG. 4 can be referred to again.

When there are other options, the database decides points on the route and frequencies available there in consideration of the meanings of the options. By the above-described operation of the database, it is possible to create the effective frequency information list indicating the available frequencies listed in correspondence to the respective points on the route indicated by the route information and the respective options as illustrated in FIG. 6. The effective frequency information list is transmitted to the database inquiring unit 14 from the database as a response to the inquiry. The database inquiring unit 14 receives this to make the effective frequency information list storing and retaining unit 17 store this and also gives the information indicating the points in the list to the current point determining unit 15.

The current point determining unit 15 determines to which point out of the aforesaid points given originally from the database, the current position given from the position specifying unit 11 is close. Concretely, for example, an operation of citing several candidates in order from the closest point can be adopted. The candidates thus cited as the point information are given to the use frequency selecting unit 18.

The applied policy selecting unit 16 refers to the option list (FIG. 3) given from the option list storing and retaining unit 13 and selects an appropriate one from the option list as the policy to be applied, based on the nature of information processing performed by the host device. The information processing performed by the host device is, plainly speaking, processing based on application, and it is thought that applying an appropriate policy so as to conform to the nature of the processing of each application is advantageous for the operation of the application. The selected policy to be applied is given to the use frequency selecting unit 18.

From the effective frequency information list retained by the effective frequency information list storing and retaining unit 17, the use frequency selecting unit 18 selects, as the use frequency, a frequency listed in correspondence to the point close to the current position out of the points given originally from the database and the policy to be applied. Regarding the point close to the current position, there is a possibility that the effective frequency information list does not have a frequency corresponding to the closest point, depending on the kind of the option, and therefore, in this case, a frequency corresponding to the next closest point is selected. Information on the selected use frequency is given to the control unit 19.

The control unit 19 controls the communication function unit 30 based on the information on the use frequency given from the use frequency selecting unit 18. That is, the communication function unit 30 performs wireless transmission/reception by using the use frequency. The communication function unit 30 is a function unit responsible for the original communication function.

In the foregoing, the configuration of one embodiment and the basic operation thereof are described. According to this communication device, there is provided the configuration in which the frequency is selected according to the pre-obtained information on the frequencies available at the respective points, and in addition, this selection becomes a selection of an advantageous frequency appropriate for the nature of the information processing. Therefore, even at the time of the movement at a high speed to a certain degree or more, it is possible to make the number of times the inquiry is sent to the database very small (in the case of the smallest number of times, once at the beginning), and to select an advantageous frequency so as to conform to the kind of the application, while the communication device is moving on the route.

Next, operations and effects of the blocks whose description is omitted or only brief in the above description, out of the blocks illustrated in FIG. 1, will be hereinafter supplementarily described. It is arbitrary whether to provide these blocks or not.

The position input unit 21 is an input unit (user interface) provided so that a user can manually input the current position thereto. The input current position can be given to the route information storing and retaining unit 12. The route information storing and retaining unit 12 can use the current position given from the position input unit 21 instead of the current position from the position specifying unit 11, as information of the starting point of the planned moving route, depending on the circumstances. For example, in such a case where the position information can be prepared in advance like that of a station of a rapid-transit railway or an interchange of an expressway, a user can select the name of the station or the name of the interchange from an interface and give the corresponding position information to the route information storing and retaining unit 12 through the position input unit 21.

The route information obtaining unit 22 is an interface for obtaining the route information from another device or apparatus for the purpose of making the route information stored and retained in the route information storing and retaining unit 12. Examples of the other device or apparatus are a navigation system (especially a car navigation system), a device capable of route search using a google map, a smartphone provided with route guide application, and so on. When the route information obtaining unit 22 is used, the user can easily create the planned moving route by using the other device or apparatus, and an appropriate frequency as the communication device can be selected in linkage with the created planned moving route.

The movement transportation means inferring unit 23 infers a movement transportation means used for the current movement of the host device, based on information on a change of a geographical position given from the position specifying unit 11. For example, when a specific rapid-transit railway or a specific expressway is a current movement transportation means, such an inference is possible from the initial position of the planned moving route and a movement destination position shortly thereafter which positions are specified by the position specifying unit 11. This is because the position information of the specific rapid-transit railway and expressway can be stored and registered in advance. The information on the inferred movement transportation means is given from the movement transportation means inferring unit 23 to the route information generating unit 24.

The route information generating unit 24 generates the route information being the planned moving route of the host device based on the information on the movement transportation means given from the movement transportation means inferring unit 23. Such route information may be information on, for example, a route up to a terminal of the specific rapid-transit railway or the specific expressway, or may be information on a route up to a point on the way. This is because, when the actual movement is not up to the terminal, a route outside the movement turns out not to be used, and when the movement is beyond a point on the way, handling the point on the way as a starting point again enables the same operation. The generated route information is given from the route information generating unit 24 to the route information storing and retaining unit 12 to be stored and retained therein.

By providing the above-described movement transportation means inferring unit 23 and route information generating unit 24, it is possible to automatically create the route information by inferring the planned moving route without a user side intentionally creating the planned moving route, which is user-friendly.

While certain embodiments have been described, these embodiments have been presented by way of example only, and are not intended to limit the scope of the inventions. The scope of the invention is defined by the appended claims.

## Claims

1. A communication device which has a communication function unit (30), the communication device comprising:
a specifying unit (11) configured to specify a first position being a geographical position where the communication device exists at a first point in time and a second position being a geographical position where the communication device exists at a second point in time later than the first point in time;
a first storing unit (12) configured to store and retain route information that includes a planned moving route of the communication device starting from the first position;
a second storing unit (13) configured to store and retain an option list that includes options each corresponding to a different viewpoint in selecting a use frequency;
a transmitting unit (14) configured to transmit the route information and the option list to a database;
a receiving unit (14) configured to receive an available frequency information list sent from the database, wherein the available frequency information list corresponds to the route information and the option list to indicate available frequencies in correspondence to each of a plurality of points on the planned moving route included in the route information and each of the options listed by the option list;
a determining unit (15) configured to determine to which point out of the plural points given from the database the second position is close;
a first selecting unit (16) configured to select an appropriate option from the option list as a selected option, based on a nature of information processing performed by the communication device;
a second selecting unit (18) configured to select, as the use frequency, an appropriate frequency, wherein in the available frequency information list the appropriate frequency is listed in correspondence to a point close to the second position out of the plural points given from the database and the selected option; and
a controlling unit (19) configured to control the communication function unit (30) to utilize the use frequency.

2. The communication device according to claim 1, further comprising an inputting unit (21) configured to input information indicating the first position in order to make the first position specified.

3. The communication device according to claim 1, further comprising an obtaining unit (22) configured to obtain the route information from another device in order to make the route information stored and retained.

4. The communication device according to claim 1, further comprising:
an inferring unit (23) configured to infer a movement transportation means used for a movement of the communication device based on a third position and the first position, the third position being a geographical position where the communication device exists at a third point in time later than the first point in time and earlier than the second point in time; and
a generating unit (24) configured to generate the route information based on the movement transportation means in order to make the route information stored and retained.

5. The communication device according to claim 1, wherein the option list has at least one or both of an option corresponding to a viewpoint to give a higher priority to reducing the number of times the use frequency is changed as much as possible and an option corresponding to a viewpoint to give a higher priority to increasing a communication speed as much as possible.

6. A communication control method for a communication device having a communication function unit, the method comprising:
specifying a first position being a geographical position where the communication device exists at a first point in time and a second position being a geographical position where the communication device exists at a second point in time later than the first point in time;
storing and retaining route information that includes a planned moving route of the communication device starting from the first position;
storing and retaining an option list that includes options each corresponding to a different viewpoint in selecting a use frequency;
transmitting the route information and the option list to a database;
receiving an available frequency information list sent from the database, wherein the available frequency information list corresponds to the route information and the option list to indicate available frequencies in correspondence to each of a plurality of points on the planned moving route included in the route information and each of the options listed by the option list;
determining to which point out of the plural points given from the database the second position is close;
selecting an appropriate option from the option list as a selected option, based on a nature of information processing performed by the communication device;
selecting, as the use frequency, an appropriate frequency, wherein in the available frequency information list the appropriate frequency is listed in correspondence to a point close to the second position out of the plural points given from the database and the selected option; and
controlling the communication function unit to utilize the use frequency.

## Patentansprüche

1. Kommunikationsvorrichtung, die eine Kommunikationsfunktionseinheit (30) aufweist, wobei die Kommunikationsvorrichtung umfasst:
eine Festlegungseinheit (11), die dafür konfiguriert ist, eine erste Position festzulegen, die eine geografische Position ist, an der die Kommunikationsvorrichtung zu einem ersten Zeitpunkt existiert, und eine zweite Position, die eine geografische Position ist, an der die Kommunikationsvorrichtung zu einem zweiten Zeitpunkt existiert, der später als der erste Zeitpunkt ist;
eine erste Speichereinheit (12), die dafür konfiguriert ist, Routeninformation zu speichern und zu sichern, die eine geplante Bewegungsroute der Kommunikationsvorrichtung beginnend mit der ersten Position einschließt;
eine zweite Speichereinheit (13), die dafür konfiguriert ist, eine Optionsliste zu speichern und zu sichern, die Optionen einschließt, die jeweils einem anderen Gesichtspunkt beim Auswählen einer zu verwendenden Frequenz entsprechen;
eine Übertragungseinheit (14), die dafür konfiguriert ist, die Routeninformation und die Optionsliste zu einer Datenbank zu übertragen;
eine Empfangseinheit (14), die dafür konfiguriert ist, eine von der Datenbank gesendete Liste mit Information über verfügbare Frequenzen zu empfangen, worin die Liste mit Information über verfügbare Frequenzen der Routeninformation und der Optionsliste entspricht, um verfügbare Frequenzen entsprechend jedem aus einer Vielzahl von Punkten auf der geplanten Bewegungsroute, die in der Routeninformation enthalten ist, und jeder der durch die Optionsliste aufgelisteten Optionen anzugeben;
eine Bestimmungseinheit (15), die dafür konfiguriert ist, zu bestimmen, welchem Punkt aus der Vielzahl der von der Datenbank gegebenen Punkte die zweite Position nahe ist;
eine erste Auswähleinheit (16), die dafür konfiguriert ist, eine geeignete Option aus der Optionsliste als eine ausgewählte Option auszuwählen, und zwar auf der Grundlage eines Charakters der durch die Kommunikationsvorrichtung durchgeführten Informationsverarbeitung;
eine zweite Auswähleinheit (18), die dafür konfiguriert ist, eine geeignete Frequenz als eine zu verwendende Frequenz auszuwählen, worin in der Liste mit Information über verfügbare Frequenzen die geeignete Frequenz entsprechend einem Punkt nahe der zweiten Position aus den mehreren aus der Datenbank gegebenen Punkten und der ausgewählten Option aufgelistet ist; und
eine Steuerungseinheit (19), die dafür konfiguriert ist, die Kommunikationsfunktionseinheit (30) zu steuern, damit sie die zu verwendende Frequenz nutzt.

2. Kommunikationsvorrichtung nach Anspruch 1, ferner eine Eingabeeinheit (21) umfassend, die dafür konfiguriert ist, Information einzugeben, welche die erste Position angibt, um die erste Position festgelegt zu machen.

3. Kommunikationsvorrichtung nach Anspruch 1, ferner eine Erlangungseinheit (22) umfassend, die dafür konfiguriert ist, die Routeninformation von einer anderen Vorrichtung zu erlangen, um die Routeninformation gespeichert und gesichert zu machen.

4. Kommunikationsvorrichtung nach Anspruch 1, ferner umfassend:
eine Ableitungseinheit (23), die dafür konfiguriert ist, auf der Grundlage einer dritten Position und der ersten Position ein für eine Bewegung der Kommunikationsvorrichtung verwendetes Bewegungstransportmittel abzuleiten, wobei die dritte Position eine geografische Position ist, an der die Kommunikationsvorrichtung zu einem dritten Zeitpunkt existiert, der später als der erste Zeitpunkt und früher als der zweite Zeitpunkt ist; und
eine Erzeugungseinheit (24), die dafür konfiguriert ist, die Routeninformation auf der Grundlage des Bewegungstransportmittels zu erzeugen, um die Routeninformation gespeichert und gesichert zu machen.

5. Kommunikationsvorrichtung nach Anspruch 1, worin die Optionsliste mindestens eines oder beides von Folgendem aufweist: eine Option, die einem Gesichtspunkt entspricht, um dem so weit wie möglich gehenden Verringern der Anzahl der Änderungen der zu verwendenden Frequenz eine höhere Priorität einzuräumen, und eine Option, die einem Gesichtspunkt entspricht, um dem so weit wie möglich gehenden Erhöhen einer Kommunikationsgeschwindigkeit eine höhere Priorität einzuräumen.

6. Kommunikationssteuerungsverfahren für eine Kommunikationsvorrichtung mit einer Kommunikationsfunktionseinheit, wobei das Verfahren umfasst:
Festlegen einer ersten Position, die eine geografische Position ist, an der die Kommunikationsvorrichtung zu einem ersten Zeitpunkt existiert, und einer zweiten Position, die eine geografische Position ist, an der die Kommunikationsvorrichtung zu einem zweiten Zeitpunkt existiert, der später als der erste Zeitpunkt ist;
Speichern und Aufbewahren von Routeninformation, die eine geplante Bewegungsroute der Kommunikationsvorrichtung beginnend mit der ersten Position einschließt;
Speichern und Aufbewahren einer Optionsliste, die Optionen einschließt, die jeweils einem anderen Gesichtspunkt beim Auswählen einer zu verwendenden Frequenz entsprechen;
Übertragen der Routeninformation und der Optionsliste zu einer Datenbank;
Empfangen einer von der Datenbank gesendeten Liste mit Information über verfügbare Frequenzen, worin die Liste mit Information über verfügbare Frequenzen der Routeninformation und der Optionsliste entspricht, um verfügbare Frequenzen entsprechend jedem aus einer Vielzahl von Punkten auf der geplanten Bewegungsroute, die in der Routeninformation enthalten ist, und jeder der durch die Optionsliste aufgelisteten Optionen anzugeben;
Bestimmen, welchem Punkt aus der Vielzahl der von der Datenbank gegebenen Punkte die zweite Position nahe ist;
Auswählen einer geeigneten Option aus der Optionsliste als eine ausgewählte Option, und zwar auf der Grundlage eines Charakters der durch die Kommunikationsvorrichtung durchgeführten Informationsverarbeitung;
Auswählen einer geeigneten Frequenz als eine zu verwendende Frequenz, worin in der Liste mit Information über verfügbare Frequenzen die geeignete Frequenz entsprechend einem Punkt nahe der zweiten Position aus den mehreren aus der Datenbank gegebenen Punkten und der ausgewählten Option aufgelistet ist; und
Steuern der Kommunikationsfunktionseinheit, damit sie die zu verwendende Frequenz nutzt.

## Revendications

1. Dispositif de communication qui comporte une unité de fonction de communication (30), le dispositif de communication comprenant :
une unité de spécification (11) qui est configurée de manière à spécifier une première position qui est une position géographique au niveau de laquelle le dispositif de communication est présent à un premier point temporel et une deuxième position qui est une position géographique au niveau de laquelle le dispositif de communication est présent à un deuxième point temporel qui se situe plus tard que le premier point temporel ;
une première unité de stockage (12) qui est configurée de manière à stocker et conserver une information de trajet qui inclut un trajet de déplacement planifié du dispositif de communication en partant de la première position ;
une seconde unité de stockage (13) qui est configurée de manière à stocker et conserver une liste d'options qui inclut des options dont chacune correspond à un point de vue différent pour la sélection d'une fréquence d'utilisation ;
une unité d'émission (14) qui est configurée de manière à émettre l'information de trajet et la liste d'options sur une base de données ;
une unité de réception (14) qui est configurée de manière à recevoir une liste d'informations portant sur les fréquences disponibles qui est envoyée depuis la base de données, dans lequel la liste d'informations portant sur les fréquences disponibles correspond à l'information de trajet et à la liste d'options pour indiquer les fréquences disponibles en correspondance avec chacun d'une pluralité de points sur le trajet de déplacement planifié qui est inclus à l'intérieur de l'information de trajet et avec chacune des options qui sont listées par la liste d'options ;
une unité de détermination (15) qui est configurée de manière à déterminer de quel point pris parmi les plusieurs points qui sont fournis depuis la base de données la deuxième position est proche ;
une première unité de sélection (16) qui est configurée de manière à sélectionner une option appropriée à partir de la liste d'options en tant qu'option sélectionnée, sur la base d'une nature d'un traitement d'information qui est réalisé par le dispositif de communication ;
une seconde unité de sélection (18) qui est configurée de manière à sélectionner, en tant que fréquence d'utilisation, une fréquence appropriée, dans lequel, à l'intérieur de la liste d'informations portant sur les fréquences disponibles, la fréquence appropriée est listée en correspondance avec un point qui est proche de la deuxième position pris parmi les plusieurs points qui sont fournis depuis la base de données et avec l'option sélectionnée ; et
une unité de commande (19) qui est configurée de manière à commander l'unité de fonction de communication (30) de manière à ce qu'elle utilise la fréquence d'utilisation.

2. Dispositif de communication selon la revendication 1, comprenant en outre une unité d'entrée (21) qui est configurée de manière à recevoir en entrée une information qui indique la première position afin de faire en sorte que la première position soit spécifiée.

3. Dispositif de communication selon la revendication 1, comprenant en outre une unité d'obtention (22) qui est configurée de manière à obtenir l'information de trajet à partir d'un autre dispositif afin de faire en sorte que l'information de trajet soit stockée et conservée.

4. Dispositif de communication selon la revendication 1, comprenant en outre :
une unité de déduction (23) qui est configurée de manière à déduire un moyen de transport par déplacement qui est utilisé pour un déplacement du dispositif de communication sur la base d'une troisième position et de la première position, la troisième position étant une position géographique au niveau de laquelle le dispositif de communication est présent à un troisième point temporel qui se situe plus tard que le premier point temporel et plus tôt que le deuxième point temporel ; et
une unité de génération (24) qui est configurée de manière à générer l'information de trajet sur la base du moyen de transport par déplacement afin de faire en sorte que l'information de trajet soit stockée et conservée.

5. Dispositif de communication selon la revendication 1, dans lequel la liste d'options comporte au moins une option ou les deux options prise(s) parmi une option qui correspond à un point de vue se matérialisant par l'octroi d'une priorité plus élevée à la réduction du nombre de fois où la fréquence d'utilisation est modifiée d'autant que possible et une option qui correspond à un point de vue se matérialisant par l'octroi d'une priorité plus élevée à l'augmentation d'une vitesse de communication d'autant que possible.

6. Procédé de commande de communication pour un dispositif de communication qui comporte une unité de fonction de communication, le procédé comprenant :
la spécifications d'une première position qui est une position géographique au niveau de laquelle le dispositif de communication est présent à un premier point temporel et d'une deuxième position qui est une position géographique au niveau de laquelle le dispositif de communication est présent à un deuxième point temporel qui se situe plus tard que le premier point temporel ;
le stockage et la conservation d'une information de trajet qui inclut un trajet de déplacement planifié du dispositif de communication en partant de la première position ;
le stockage et la conservation d'une liste d'options qui inclut des options dont chacune correspond à un point de vue différent pour la sélection d'une fréquence d'utilisation ;
l'émission de l'information de trajet et de la liste d'options sur une base de données ;
la réception d'une liste d'informations portant sur les fréquences disponibles qui est envoyée depuis la base de données, dans lequel la liste d'informations portant sur les fréquences disponibles correspond à l'information de trajet et à la liste d'options pour indiquer les fréquences disponibles en correspondance avec chacun d'une pluralité de points sur le trajet de déplacement planifié qui est inclus à l'intérieur de l'information de trajet et avec chacune des options qui sont listées par la liste d'options ;
la détermination de quel point pris parmi les plusieurs points qui sont fournis depuis la base de données la deuxième position est proche ;
la sélection d'une option appropriée à partir de la liste d'options en tant qu'option sélectionnée, sur la base d'une nature d'un traitement d'information qui est réalisé par le dispositif de communication ;
la sélection, en tant que fréquence d'utilisation, d'une fréquence appropriée, dans lequel, à l'intérieur de la liste d'informations portant sur les fréquences disponibles, la fréquence appropriée est listée en correspondance avec un point qui est proche de la deuxième position pris parmi les plusieurs points qui sont fournis depuis la base de données et avec l'option sélectionnée ; et
la commande de l'unité de fonction de communication de manière à ce qu'elle utilise la fréquence d'utilisation.
